**Europäisches Patentamt**

**European Patent Office**

**Office européen des brevets**

(19)

(11) Numéro de publication : **0 194 929 B1**

(12) **FASCICULE DE BREVET EUROPÉEN**

(45) Date de publication du fascicule du brevet :
**20.01.88**

(51) Int. Cl.⁴ : **B 62 D   6/02**

(21) Numéro de dépôt : **86400460.1**

(22) Date de dépôt : **05.03.86**

(54) **Dispositif asservi de contrôle de débit pour installation hydraulique, notamment pour direction assistée de véhicule.**

(30) Priorité : **13.03.85 FR 8503688**

(43) Date de publication de la demande :
**17.09.86 Bulletin 86/38**

(45) Mention de la délivrance du brevet :
**20.01.88 Bulletin 88/03**

(84) Etats contractants désignés :
**DE GB IT**

(56) Documents cités :
**EP-A- 0 071 909**
**EP-A- 0 089 512**
**FR-A- 2 207 481**
**FR-A- 2 275 715**

(73) Titulaire : **BENDIX France**
**126, rue de Stalingrad**
**F-93700 Drancy (FR)**

(72) Inventeur : **Kervagoret, Gilbert**
**5 Impasse Nobleterre**
**F-95100 Argenteuil (FR)**

(74) Mandataire : **Le Moenner, Gabriel et al**
**SERVICE BREVETS BENDIX 44, Rue François 1er**
**F-75008 Paris (FR)**

Jouve, 18, rue St-Denis, 75001 Paris, France

**0 194 929**

## Description

La présente invention concerne les dispositifs asservis de contrôle de débit pour installation hydraulique, notamment pour direction assistée de véhicule, comprenant une source de pression dont la sortie est reliée à un système de commande de moteur hydraulique, le dispositif étant destiné à être interposé dans une conduite de dérivation entre la sortie de la source de pression et une bâche, et étant du type comprenant un corps comportant un passage d'entrée, destiné à être relié à la sortie de la source de pression, un passage de sortie, destiné à être relié à la bâche, et un passage intermédiaire, entre les passages d'entrée et de sortie, dans lequel est disposé un organe de commande commandant le passage de fluide entre les passages d'entrée et de sortie et piloté par un moyen de commande électromagnétique en fonction d'un signal électrique de commande, par exemple fonction de la vitesse du véhicule pour une direction assistée de véhicule.

Un dispositif de ce type est décrit dans le document US-A-4 473 128. Dans ce document, le passage de fluide bipassé dans la conduite de dérivation est déterminé par une restriction modulable déterminée par un tiroir commandé par le moyen de commande électromagnétique, c'est-à-dire suivant un agencement dépendant de la position du tiroir, cet asservissement en position étant délicat à contrôler, notamment en fonction de fluctuations du signal électrique de commande du moyen de commande électromagnétique, et imposant pour ce dernier de fournir en permanence un effort relativement important.

La présente invention a pour objet de proposer un dispositif asservi de contrôle de débit de conception particulièrement simple, robuste et fiable, partiellement assisté par un auto-pilotage hydraulique.

Pour ce faire, selon l'invention, l'organe de commande est constitué par un élément de clapet coopérant avec un siège de clapet formé dans le passage intermédiaire entre les passages d'entrée et de sortie, l'élément de clapet étant disposé dans ce passage intermédiaire et étant sollicité contre son siège par un ressort et par une première extrémité d'un poussoir monté à coulissement étanche dans un alésage du corps entre le passage intermédiaire et une chambre communiquant en permanence avec le passage d'entrée, le poussoir ayant sa seconde extrémité coopérant, dans ladite chambre, avec un plongeur du moyen de commande électromagnétique.

Dans un tel agencement, le débit de fluide bipassé dans la conduite de dérivation est donc commandé en fonction de l'équilibre des forces mécanique, électromagnétique et hydrauliques agissant sur l'équipage élément de clapet/poussoir.

D'autres caractéristiques et avantages de la présente invention ressortiront de la description suivante d'un mode de réalisation, donnée à titre illustratif mais nullement limitatif, faite en relation avec les dessins annexés, sur lesquels :

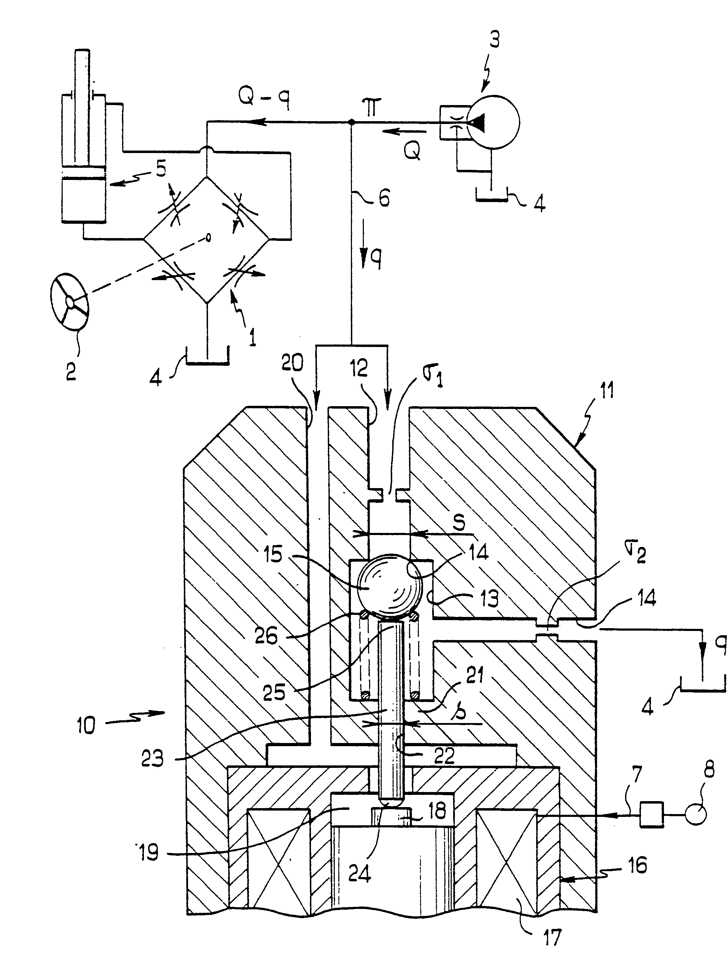

La Figure unique représente le schéma synoptique d'un système de direction assistée équipé d'un dispositif asservi de contrôle de débit selon l'invention, représenté en coupe schématique.

On reconnaît sur le schéma de la Figure unique un système de direction assistée de véhicule comprenant, de façon connue en soi, une servovalve de distribution 1 actionnée par le volant de direction 2 d'un véhicule et interposée entre une source de fluide sous pression 3, généralement équipée d'un dispositif régulateur de débit intégré, et une bâche 4 pour alimenter sélectivement et alternativement en fluide sous pression les chambres opposées d'un moteur hydraulique d'assistance 5. Conformément à l'invention, dans une conduite de dérivation 6 entre la sortie de la source de pression 3 et la bâche 4, est interposé un dispositif 10 de contrôle du débit bipassé dans la conduite de dérivation 6 (et donc soustrait à la servovalve de direction 1) en fonction d'un signal électrique 7 élaboré à partir d'un capteur 8 fournissant un paramètre caractéristique du véhicule, par exemple la vitesse de déplacement de ce dernier.

Le dispositif 10 selon l'invention comprend un corps 11 dans lequel est formé un passage de fluide constitué d'un passage d'entrée 12 destiné à être relié au tronçon du conduit de dérivation 6 provenant de la sortie de la source 3, un passage intermédiaire élargi 13 et un passage de sortie 14 destiné à être reliés à la bâche 4. La jonction entre le passage d'entrée 12 et le passage intermédiaire 13 forme un siège 14 de section transversale S pour un élément de clapet 15 constitué typiquement d'une bille. Dans le corps 11 est disposé un organe électromagnétique de commande 16 du type électroaimant à entrefer constant dont la bobine 17 reçoit le signal électrique de commande 7 susmentionné pour commander un plongeur 18 susceptible de se déplacer dans une chambre 19 formée dans le corps 11 et communiquant en permanence, par un passage 20 dans le corps, avec l'entrée du passage d'entrée 12. La chambre 19 est séparée du passage intermédiaire 13 par une cloison 21, formant le fond du passage intermédiaire 13 opposé au siège de clapet 14. La cloison 21 est traversée par un alésage 22 coaxial au passage d'entrée 12 et dans lequel est monté à coulissement étanche un poussoir cylindrique 23 de section s inférieure à la section S et ayant une première extrémité arrondie 24 coopérant, dans la chambre 19, avec le plongeur 18, et dont la seconde extrémité 25 coopère, dans le passage intermédiaire 13, avec l'élément de clapet 15 pour le solliciter en direction de son siège 14. L'élément de clapet 15 est en outre sollicité en permanence contre son siège 14 par un ressort faiblement taré 26. Selon un aspect de l'invention, une restriction fixe $\sigma_1$ est formée dans le passage d'entrée 12, une restriction fixe $\sigma_2$ étant formée dans le passage de sortie

2

14.

Le fonctionnement du dispositif est le suivant. Soit Q et $\Pi$ le débit et la pression de sortie de la source de pression 3, q le débit bipassé dans la conduite de dérivation 10, $P_1$ la pression en amont du siège de clapet 14 (en aval de la restriction $\sigma_1$), $P_2$ la pression dans le passage intermédiaire 13, F la force du ressort 26 et $\varphi$ l'effort (modulable) appliqué par le plongeur 18 sur l'élément de clapet 15 via le poussoir 23. On remarquera que le poussoir 23 est soumis en permanence à la différentielle de pression $\Pi$-$P_2$. Lorsque l'élément de clapet 15 est ouvert, le conduit de dérivation 6 voit passer un débit bipassé q tel que :

$$q = \sigma_2 \sqrt{P_2} = \sigma_1 \sqrt{\pi - P_1} \tag{1}$$

Il s'ensuit la relation suivante :

$$P_2 = (\pi - P_1) \cdot \left( \frac{\sigma_1}{\sigma_2} \right)^2 = (\pi - P_1) \cdot K \tag{2}$$

La condition d'ouverture de l'élément de clapet 15 est régie par la relation :

$$(P_1 - P_2) S = \varphi + F + (\pi - P_2) s \tag{3}$$

Soit,

$$P_1 = \frac{\varphi + F + \pi [KS - (K-1)s]}{(1+K)S - Ks} \tag{4}$$

De la relation (1) on déduit donc la relation :

$$q = \sigma_1 \sqrt{\pi \frac{S-s}{(1+K)S - Ks} - \frac{\varphi + F}{(1+K)S - Ks}} = \sigma_1 \sqrt{A\pi - B} \tag{5}$$

On constate donc que la valeur du débit bipassé q est fonction de l'effort $\varphi$ (s'ajoutant à l'effort F du ressort 26) fourni par le moyen de commande électromagnétique 16, les autres paramètres étant des paramètres fixes déterminés par construction. Selon la relation :

$$\varphi_M + F = \pi(S - s) \tag{6}$$

où $\varphi_M$ est l'effort maximal susceptible d'être fourni par le plongeur 18.

Ainsi, pour différentes valeurs de l'effort $\varphi$ (en fonction du signal électrique de commande 7) on obtiendra différentes valeurs du débit adressé effectivement à la servovalve de distribution 1. Typiquement, l'effort $\varphi$ est une fonction inversement proportionnelle à la vitesse du véhicule fournie par le capteur 8, d'où il s'en suit une diminution de l'assistance fournie par le moteur hydraulique 5 lorsque la vitesse du véhicule augmente. Par contre, à basse vitesse, l'effort appliqué sur l'élément de clapet 15 est proche de la valeur maximum $\varphi_M$, le débit bipassé q étant alors quasiment nul.

Quoique l'invention ait été décrite en relation avec un mode de réalisation particulier, elle ne s'en trouve pas limitée mais est au contraire susceptible de modifications et de variantes qui apparaîtront à l'homme de l'art.

**Revendications**

1. Dispositif asservi de contrôle de débit pour installation hydraulique (1, 5), notamment pour direction assistée de véhicule, comprenant une source de pression (3) dont la sortie est reliée à un système de commande (1) de moteur hydraulique (5), le dispositif (10) étant destiné à être interposé dans une conduite de dérivation (6) entre la sortie de la source de pression (3) et une bâche (4) et comprenant un corps (11) comportant un passage d'entrée (12) destiné à être relié à la sortie de la source de pression (3), un passage de sortie (14), destiné à être relié à la bâche (4), et un passage intermédiaire (13) entre les passages d'entrée et de sortie et dans lequel est disposé un organe de commande (15) commandant le passage de fluide entre les passages d'entrée (12) et de sortie (14) et piloté par un moyen de commande électromagnétique (16) en fonction d'un signal électrique de commande (7), caractérisé en ce que l'organe de commande (15) est constitué par un élément de clapet coopérant avec un siège de clapet (14) formé dans le passage intermédiaire (13), l'élément de clapet (15) étant disposé dans ce passage intermédiaire (13) et étant sollicité contre son siège (14) par un ressort (26) et par une première extrémité (25) d'un poussoir (23) monté à coulissement étanche dans un alésage (22) du corps reliant le passage intermédiaire (13) et une chambre interne (19) communiquant en permanence avec le passage d'entrée (12), le poussoir (23) ayant sa seconde extrémité (24) coopérant, dans ladite chambre (19), avec un plongeur (18) du moyen de commande électromagnétique (16).

2. Dispositif selon la revendication 1, caractérisé en ce que le siège de clapet (14) a une section de passage (S) supérieure à la section transversale (s) du poussoir (23).

3. Dispositif selon la revendication 1 ou la revendication 2, caractérisé en ce que le passage d'entrée (12) comprend une restriction fixe $(\sigma_1)$.

4. Dispositif selon la revendication 3, caractérisé en ce que le passage de sortie (14) comprend une restriction fixe $(\sigma_2)$.

5. Dispositif selon l'une des revendications précédentes, caractérisé en ce que le siège de clapet (14) est formé par la jonction entre le passage d'entrée (12) et le passage intermédiaire (13).

6. Dispositif selon l'une des revendications précédentes, caractérisé en ce que l'élément de clapet (15) est constitué par une bille.

## Claims

1. A Servo device for controlling flow in a hydraulic installation (1, 5), particularly for the assisted steering of a vehicle, comprising a source of pressure (3) whose outlet is connected to a system (1) for controlling a hydraulic actuator (5), the device (10) being intended to be interposed in a branch hydraulic line (6) between the outlet of the source of pressure (3) and a reservoir (4) and comprising a body (11) having an inlet passage (12) which is intended to be connected to the outlet of the source of pressure (3), an outlet passage (14) which is intended to be connected to the reservoir (4), and an intermediate passage (13) between the inlet and outlet passages in which a control component (15) is situated, the control component (15) controlling the flow of fluid between the inlet passage (12) and the outlet passage (14) and being regulated by an electromagnetic control means (16) as a function of an electrical control signal (7), characterized in that the control component (15) consists of a valve component cooperating with a valve seat (14) formed in the intermediate passage (13), the valve component (15) being situated in this intermediate passage (13) and being biased against its seat (14) by a spring (26) and by a first end (25) of a push-rod (23) which is slidingly sealingly mounted in a bore (22) of the body connecting the intermediate passage (13) to an internal chamber (19) which communicates permanently with the inlet passage (12), the push-rod (23) having its second end (24) cooperating, in the said chamber (19), with a plunger (18) of the electromagnetic control means (16).

2. Device according to Claim 1, characterized in that the valve seat (14) has an opening whose cross-section (S) is greater than the transverse cross-section (s) of the push-rod (23).

3. Device according to Claim 1 or Claim 2, characterized in that the inlet passage (12) includes a fixed restriction $(\sigma_1)$.

4. Device according to Claim 3, characterized in that the outlet passage (14) includes a fixed restriction (62).

5. Device according to one of the preceding Claims, characterized in that the valve seat (14) is formed by a junction between the inlet passage (12) and the intermediate passage (13).

6. Device according to one of the preceding Claims, characterized in that the valve component (15) consists of a ball.

## Patentansprüche

1. Servo-Durchflußsteuervorrichtung für eine hydraulische Anlage (1, 5), insbesondere für eine Kraftfahrzeug-Servolenkung, mit einer Druckquelle (3), deren Ausgang mit einer Hydraulikmotor (5) — Steueranlage (1) verbunden ist, wobei die Vorrichtung (10) in eine Zweigleitung (6) zwischen dem Ausgang der Druckquelle (3) und einem Sammelbehälter (4) einsetzbar ist und ein Gehäuse (11) mit einem Einlaßkanal (12), einem Auslaßkanal (14) und einem Zwischenkanal (13) aufweist, von denen der Einlaßkanal mit dem Ausgang der Druckquelle (3) verbindbar ist, der Auslaßkanal (14) mit dem Sammelbehälter (4) verbindbar ist und der Zwischenkanal (13) zwischen dem Einlaß- und Auslaßkanal angeordnet ist und ein Steuerglied (15) enthält, das den Durchfluß zwischen dem Einlaßkanal (12) und dem Auslaßkanal (14) steuert und von einer elektromagnetischen Steuereinrichtung (16) in Abhängigkeit von einem elektrischen Steuersignal (7) betätigt wird, dadurch gekennzeichnet, daß das Steuerglied (15) von einem Ventilkörper gebildet wird, der mit einem in dem Zwischenkanal (13) gebildeten Ventilsitz (14) zusammenwirkt, wobei der Ventilkörper (15) in dem Zwischenkanal (13) angeordnet ist und gegen seinen Sitz (14) von einer Feder (26) und einem ersten Ende (25) eines Stößels (23) vorgespannt wird, welcher in einer Bohrung (22) abgedichtet gleitend gelagert ist, welche den Zwischenkanal (13) und eine innere Kammer (19) miteinander verbindet, die dauernd mit dem Einlaßkanal (12) in Verbindung stehen, wobei der Stößel (23) an seinem zweiten Ende (24) in der Kammer (19) mit einem Plunger (18) der elektromagnetischen Steuereinrichtung (16) zusammenwirkt.

2. Vorrichtung nach Anspruch 1, dadurch gekennzeichnet, daß der Ventilsitz (14) eine Durchtrittsfläche (S) hat, die größer ist als die Querschnittsfläche (s) des Stößels (23).

3. Vorrichtung nach Anspruch 1 oder 2, dadurch gekennzeichnet, daß der Einlaßkanal (12) eine feste Drosselstelle ($\sigma_1$) besitzt.

4. Vorrichtung nach Anspruch 3, dadurch gekennzeichnet, daß der Auslaßkanal (14) eine festgelegte Drosselstelle ($\sigma_2$) besitzt.

5. Vorrichtung nach einem der vorhergehenden Ansprüche, dadurch gekennzeichnet, daß der Ventilsitz (10) von der Verbindungsstelle zwischen dem Einlaßkanal (12) und dem Zwischenkanal (13) gebildet wird.

6. Vorrichtung nach einem der vorhergehenden Ansprüche, dadurch gekennzeichnet, daß das Ventilgleid (15) von einer Kugel gebildet wird.